(19) Europäisches Patentamt
European Patent Office
Office européen des brevets

(11) **EP 2 765 396 A1**

(12) **EUROPEAN PATENT APPLICATION**

(43) Date of publication:
**13.08.2014 Bulletin 2014/33**

(51) Int Cl.:
*G01F 1/36* (2006.01)          *G01F 1/50* (2006.01)
*G01F 1/72* (2006.01)

(21) Application number: **14154081.5**

(22) Date of filing: **06.02.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.02.2013 IL 22459913**

(71) Applicant: **GSL Golden Shell Co Ltd.
4902236 Petach Tikva (IL)**

(72) Inventor: **Gordin, Fellx
4902236 Petach Tikva (IL)**

(74) Representative: **Modiano, Micaela Nadia et al
Modiano & Partners (DE)
Thierschstrasse 11
80538 München (DE)**

(54) **Flow meter and method for using same**

(57)    A flow meter is disclosed which comprises a flow pipe for measuring consumption of a fluid passing therethrough irrespective of flow direction. The flow pipe comprises a central segment and two edge segments, each located at a different side of the central segment so that the three segments form a continuous passage for the passing fluid. The flow meter is configured to enable flow of the fluid via an aperture to/from the central segment from/to a respective edge segment, while each of the edge segments has an inner diameter greater than that of the respective aperture enabling the flow from/to that edge segment to/from the central segment. The flow meter further comprises three pressure meters, each configured to enable measuring static pressure of the fluid flowing through a respective segment, thereby enabling to determine forward and backward fluid flows through the flow pipe.

FIG. 1

**Description**

**Technical Field**

The present invention generally relates to meters for fluid flow and particularly to a novel water meter that may be used to indicate leakages in water supply systems.

**Background**

A flow meter such as a water meter is a device used to measure the volume of fluid being consumed.

In many developed countries, water meters are used to measure the volume of water consumed by residential and commercial buildings that are supplied with water by a public water supply system. Water meters may also be used at the water source, or at various locations throughout the water system in order to determine the flows delivered through that portion of the system. In most of the world, water meters are adapted to measure flow in cubic meters ($m^3$) or liters on a mechanical or electronic register. Some electronic meter registers can display rate-of-flow in addition to the aggregated amount that had been consumed.

There are several types of water meters that are commonly used. Selection of the required water meter is based upon different flow measurement methods, the type of the end user, the required flow rates, as well as upon measurement accuracy requirements.

There are two major methods of flow measurement that are commonly in use, namely, displacement and velocity, wherein each of these methods may be carried out by using various meters that are based on different technologies. Among common displacement meters there are oscillating piston and disk meters. Velocity-based meters typically include single- and multi-jet meters and turbine meters. There are also non-mechanical designs, for example electromagnetic and ultrasonic meters.

In addition to the commonly used types of meters, there are meters designed for special uses. However, most meters in a typical water distribution system are designed only for cold potable-grade water.

A velocity-type meter measures the velocity of flow through a meter having a known internal capacity. The velocity of the flow can then be converted into flow rate to determine the amount of water consumed within a certain period of time. There are several types of meters that measure water flow velocity in order to determine total consumption. They include jet meters (single-jet and multi-jet), turbine meters, propeller meters, etc. Most velocity-based meters have an adjustment vane for calibration of the meter to the required accuracy.

Multi-jet meters are very accurate when installed in small sizes pipes and are commonly used in pipes having 5/8" to 2" diameter for residential and small commercial uses. Multi-jet meters use multiple ports surrounding an internal chamber, to create multiple jets of water against an impeller, and the impeller rotation speed is proportional to the velocity of water flow. Multi-jet meters are very accurate while the flow rates are low, but are not used for larger pipes' sizes, since they do not have the straight-through flow path needed for the high flow rates which are typical in large pipe diameters.

Turbine meters are less accurate than displacement and jet meters at low flow rates, but the measuring element does not occupy or severely restrict the entire flow path. The flow direction is generally straight through the meter, allowing for higher flow rates and less pressure loss than displacement-type meters. They are the meter of choice for large commercial users, fire protection, and as master meters for the water distribution system. Strainers are generally required to be installed in front of such a meter in order to protect the measuring element from gravel or other debris that could enter the water distribution system. Turbine meters are generally available for pipes having 1.5" to 12" diameter or higher pipe sizes.

Among non-mechanical meters there are the magnetic flow meters, commonly referred to as "mag meters", which are technically a velocity-type water meter, except that they use electromagnetic properties to determine the water flow velocity rather than mechanical means which are used by jet and turbine meters. Mag meters use the physical principle of Faraday's law of induction for measurement, and require AC or DC electricity from a line or a battery to operate the electromagnets. Mag meters may also be useful for measuring untreated water, raw (untreated/unfiltered) water, and wastewater, since there is no mechanical measuring element to get clogged or damaged by debris flowing through the meter. Strainers are not required with mag meters, since there is no measuring element in the stream of flow that could be damaged. Stray electrical energy flowing through the flow tube can cause inaccurate readings, therefore most mag meters are installed with either grounding rings or grounding electrodes to divert stray electricity away from the electrodes inside the flow tube that are used to measure the flow.

Ultrasonic water meters use an ultrasonic transducer for sending ultrasonic sound waves through the fluid to determine its velocity and translate the velocity into measurement of the fluid (water) volume.

However, one of the problems associated with water distribution systems that leads to inaccurate readings of water consumption is the generation of backward flows or backflows.

Backflow is a term used for an unwanted flow of water in the reverse direction (i.e. in the opposite direction to the one used in the water delivery system). Typically, backflow occurs due to one of two main reasons, either back pressure or back siphonage. Back pressure is the result of a pressure temporarily occurring in the system that is higher than the water supply pressure, i.e. when the system pressure has been temporarily increased by some means. This may occur for example in unvented heating systems, where thermal expansion increases the pressure. Back siphonage is the result of supply pressure being lowered below that of the system. This occurs when a supply is interrupted or drained down.

In order to increase the accuracy of water meters used, one should be able to take backflows into account. However, the flow meters used nowadays in the water delivery systems are not adequate to overcome this problem as they take into account only forward flows. In order to improve the accuracy of the supply system, it is therefore required to use a flow meter that is capable of measuring both forward and backward flows, and at the same time will be economical enough so that it can be used in systems such as public water supply systems.

**Summary of the Disclosure**

The disclosure may be summarized by referring to the appended claims.

It is an object of the present invention to provide an improved fluid meter and a method for using same for monitoring both forward and backward flows.

It is another object of the present invention to provide an accurate flow meter in which the readings may be temperature-adjusted.

It is yet another object of the present invention to provide a method to enable identifying locations of leaks in a piping system.

It is still another object of the present invention to provide a water meter that comprises no moving parts immersed in the water, thereby reducing the possibility of scaling accumulation within the water meter.

It is yet another object of the present invention to provide a water meter that is able to retrieve static pressures at its installation point, thereby enabling the water provider to map static pressures throughout his system.

It is another object of the present invention to provide an accurate flow meter that may used in wide pipes (e.g. of 3" diameter and higher).

Other objects of the invention will become apparent as the description of the invention proceeds.

According to a first aspect of the disclosure there is provided a flow meter consisting of a flow pipe operative for metering consumption of fluid passing through the flow pipe irrespective of the flow direction, wherein the flow pipe comprises three segments, (preferably but not necessarily, integral segments), a central segment and two edge segments, wherein each of the edge segments is located at a different side of the central segment in a way that the three segments form a straight continuous passage for the passing fluid, wherein the flow meter is adapted to enable flow of the fluid via an aperture to/from the central segment from/to a respective edge segment, and wherein each of the edge segments has an inner diameter greater than that of the respective aperture that enables flow from/to that edge segment to/from the central segment. The flow meter further comprises three pressure meters (e.g. transducers), each connected to a respective one of the three segments and configured to measure pressure (e.g. static pressure) at that segment, thereby enabling to determine forward and backward fluid flow rates through the flow pipe.

The term "flow" as used herein throughout the specification and claims is used to denote a quantity of fluid being conveyed along the flow pipe within a period of time (or along any other applicable conduit, which should be understood to be also encompassed by the present invention). Typically, flow is expressed in number of cubic meters of the material (e.g. water, gas) being conveyed within a pre-determined period of time (e.g. cubic meters per minute, cubic meter per month, etc.).

The flow meter described herein through the specification and claims is described as comprising a flow pipe through which the fluid passes. However, it should be understood that the term "flow pipe" relates in fact to a flow conduit which can be of any one of different applicable shapes, as long as the cross section of the central segment (which may be expressed in terms of inner diameter or rather an equivalent inner diameter), is narrower than that of the two edge segments. The description provided herein of the flow meter as comprising a flow pipe is done simply for the comfort of the reader.

According to another embodiment, the flow meter further comprising temperature measuring means operative to retrieve actual temperature of the fluid flowing through the flow pipe, to enable adjustment of the forward and/or backward fluid flows through the flow pipe in accordance with the measured temperature.

By still another embodiment, the flow meter further comprises a transmitter operative to transmit data towards a remote location, wherein that data relates to the forward and/or backward fluid flows through the flow pipe.

According to yet another embodiment, the fluid whose flow is being metered/monitored is essentially a non-compressible fluid, preferably water.

According to another aspect there is provided a method for monitoring fluid consumption by a flow meter that includes a flow pipe that comprises three segments, (preferably but not necessarily, integral segments), a central segment and two edge segments, each located at a different side of the central segment in a way that the three segments form a continuous (preferably straight) passage for the passing fluid, wherein the flow meter is adapted to enable flow of the fluid via an aperture to/from the central segment from/to a respective edge segment, wherein each of the edge segments has an inner diameter greater than that of the respective aperture that enables flow from/to that edge segment to/from the central segment, and wherein the flow meter further comprising three pressure meters (e.g. transducers), each connected to a respective one of the three segments of the flow pipe and configured to measure the static pressure at that segment, the method comprising the steps of:

measuring static pressure at the central segment of the flow pipe and static pressure at the at least one of the edge segments of the flow pipe; and
determining amount of fluid flowing from the at least one of the edge segments of the flow pipe to the central part thereof (e.g. in a form of aggregated quantity, as flow rate, etc.).

According to another embodiment, the method further comprises a step of measuring temperature of the fluid passing through the flow pipe concurrently with measuring the static pressures, and adjusting the determined amount of the fluid flow in accordance with the measured temperature.

In accordance with another embodiment, the method comprising the steps of:

(i) measuring static pressure at the edge segment that precedes the central segment of the flow pipe in the forward direction and the static pressure at the central segment;
(ii) determining the amount of fluid flow in the forward direction based on the results of the measurements of the static pressure at central segment and at the edge segment that precedes the central segment;
(iii) measuring the static pressure at the edge segment that follows the central segment of the flow pipe in the forward direction;
(iv) determining amount of fluid flow in the backward direction based on the results of the measurements of the static pressure at central segment and at the edge segment that follows the central segment; and
(v) subtracting the amount of fluid flowing in the backward direction from the amount of fluid flowing in the forward direction, thereby determining the net forward fluid flow that passed through the flow pipe.

In accordance with another embodiment, the method further comprising a step of determining whether the flow is a flow in the forward direction or in the backward direction, based on the pressure measurements results at both edge segments.

By yet another embodiment, the method further comprises a step of transmitting data that relates to the forward and/or backward fluid flows through the flow pipe, towards a remote location.

According to still another embodiment, the method further comprises a step of identifying locations (e.g. pipes' sections in a fluid supply system) of leaks, based on the results of the forward and backward flow measurements.

In accordance with another embodiment, the method further comprises a step of identifying sections of a fluid supply system where pipes should be changed (e.g. replacing pipes with ones having smaller diameters than the currently installed ones, replacing leaking pipes, etc.), based on the results of the forward and backward flow measurements.

**Brief Description of the Drawings**

For a more complete understanding of the present invention, reference is now made to the following detailed description taken in conjunction with the accompanying figures, wherein

FIG. 1 is a schematic diagram of the flow pipe being part of the flow meter construed in accordance with the present invention; and
FIG. 2 is a flow chart demonstrating a method of carrying out an embodiment of the present invention.

**Detailed Description**

In this disclosure, the term "comprising" is intended to have an open-ended meaning so that when a first element is stated as comprising a second element, the first element may also include one or more other elements that are not necessarily identified or described herein, or recited in the claims.

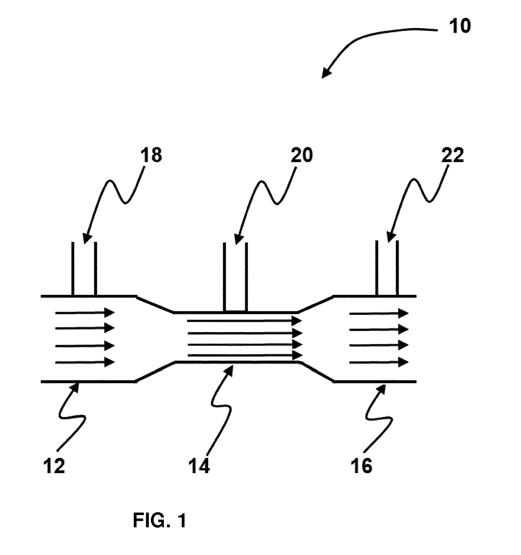

FIG. 1 illustrates a schematic view of the main part of a water meter according to an embodiment of the invention, flow pipe 10. Typically, the water flow of the present invention is adapted to measure flows through pipes having a diameter of 3" or higher.

Flow pipe 10 consists of three segments, namely, 12, 14 and 16 and apertures that enable continuous flow between each pair of adjacent segments. As shown in this Fig., the inner cross section of segment 14 (i.e. the central segment) is smaller than that of the other two segments, 12 and 16. To each of the three segments of the flow pipe there is a pressure transducer outlet (18, 20 and 22) associated therewith which comprises a pressure transducer, to enable measuring the pressure difference between two segments, thereby to enable determining the volumetric flow rate of water being conveyed therethrough. Each of the pressure transducers generates a signal (preferably but not necessarily an electrical signal), and the difference between the two generated signals indicates the pressure difference between the two respective sections. The static pressure that will be measured at the transducer outlet 18 would be higher than that at transducer outlet 20, and similarly the static pressure that will be measured at the transducer outlet 22 would be higher than that at transducer outlet 20. If the static pressure that will be measured at the transducer outlet 18 is higher than that at transducer outlet 22, the flow will be considered as a flow in the forward direction, whereas is the static pressure that will be measured at the transducer outlet 22 is higher than that at transducer outlet 18, the flow will be considered as a flow in the backward direction. The water velocity on the other hand, will be in segment 14 higher than in both segments 12 and 16.

Thus, the flow meter described herein enables to determine whether a back flow exists, and if so also the net forward flow, after taking into account the backward flow.

The pressure difference between two adjacent segments is directly proportional to the flow rate through the flow pipe.

Let us first consider the segments 12 and 14 (i.e. the central segment and its preceding segment). The water flow Q remains constant between the two segments so that we can write

$$Q = V_1 A_1 = V_2 A_2 \qquad (1)$$

where $V_1$ and $V_2$ are the water velocity through segments 12 and 14, respectively, and $A_1$ and $A_2$ are the cross section areas of segments 12 and 14 respectively.

According to Bernoulli's equation

$$\Delta P = P_1 - P_2 = \rho/2 \ (V_1{}^2 - V_2{}^2) \qquad (2)$$

Thus, by substituting Eq. 2 into Eq. 1, one would get the following relationship for the flow:

$$(3)$$

$$Q = A_1 \sqrt{\frac{2}{\rho} \cdot \frac{(p_1 - p_2)}{\left(\frac{A_1}{A_2}\right)^2 - 1}} = A_2 \sqrt{\frac{2}{\rho} \cdot \frac{(p_1 - p_2)}{1 - \left(\frac{A_2}{A_1}\right)^2}}$$

As both $A_1$ and $A_2$ are known for every specific flow meter, by measuring the pressure difference between sections 12 and 14, the flow in the forward direction can be determined.

Now, let us assume that there is a back flow within that very same pipe, which may be caused due to any one of a number of reasons discussed above. In this case a similar process will be carried out to determine the water flow from section 16 to section 14 (backward flow) based on the pressure difference measured between segments 14 and 16.

Thus, in order to determine the actual amount of water that was consumed via flow pipe 10, the aggregated forward flow less the aggregated backward flow, will yield the actual amount of water being consumed. In order to improve the accuracy of the determination, the temperature is also measured by any means (not shown in this Fig.) known in the art *per se,* and based on the actual measured water temperature, the actual water density, p, is applied in Eq. (3), rather than the approximated value of 1000 Kg/m$^3$. This feature of the present disclosure has a number of advantages. First, it enables to provide consumption bills that are based on the actual weight of the fluid consumed and not on the volume of that fluid, as most of the prior art water meters do. This fact alone improves the accuracy of the data retrieved from the water meter of the present invention by about 0.5%. Furthermore, it allows using the very same flow meter in case of monitoring the flow of other substances such as oil etc., wherein these substances (typically liquids) have densities that are more temperature dependent than water.

According to an embodiment of the invention, the flow meter further comprises a transmitter operative to transmit data generated by the pressure transducers towards a remote location. The data according to this embodiment may be transmitted either in its raw form, e.g. as generated by each of the three transducers, or in the alternative, the flow meter may further comprise a processor, in which case the data may be transmitted after it has been properly processed. The transmitted data is received at a remote location, e.g. at the water provider facility.

One other problem associated with water meters of the prior art, is, how to identify and locate underground leaks, or even how to identify which of the pipes in a large water supply system is leaking. The problem arises from the fact that in a normal water supply system, about 15-20% of the water is unaccountable due to a number of reasons, among which are backward flows, which, due to the characteristics of common water meters, cannot be taken into consideration, as they read only water that flows in the forward direction. In case of pressure build up, etc. which causes backward flows. Therefore, these backward flows are not being monitored and consequently, it is a cumbersome if not impossible task to identify sections of the pipes where there are actual leaks (e.g. in which sections the unaccountable amount of water is not due to back flow).

The fact that the solution provided by the present disclosure takes these back flows into consideration, results in obtaining much more reliable readings of the water consumed and substantially less water is being unaccounted for.

Due to this fact, if, when comparing readings of two adjacent water meters of the present disclosure installed along a water pipe, there is a substantial discrepancy between the two readings, it is highly likely that there is a leak in the part of the pipe that extends between these two meters. This assumption is not that clear for water meters of the prior art that do not take back flows into consideration.

According to another embodiment, the method provided by the present disclosure further comprises a step of determining whether the flow is a flow in the forward direction or in the backward direction, based on the results of the pressure measurements at both edge segments. If the pressure measured at segment 12 (by transducer 18) is higher than that measured at segment 16 (by transducer 22), the water flow at the time when these measurements were taken is a flow in the forward direction (from left to right through the water meter), whereas if the pressure measured at segment 16 is higher than that measured at segment 12, the water flow at the time when these measurements were taken is a flow in the backward direction flow (e.g. from right to left through the water meter). Carrying out this embodiment for water meters of the present disclosure that are installed in say a municipal water distribution system, allows better monitoring of the water distribution system and identifying under real near time conditions the existence of underground leakage, within the proximity of about 50 meters.

Furthermore, installing the water meters of the present disclosure in a municipal water supply system enables retrieving flow data and static pressures' data as function of time along the day. These data cannot be obtained by using the water meters of the prior art as the flow may change randomly (from right to left and vice versa) during the day.

In addition, the water meters of the present disclosure enable a better management of water system. For example, due to the fact that there is a continuous stream of data that relates to pressures of both forward and backward flows (irrespective of the time of their occurrence), the activation of the system's boosters can be done on a need basis only, specific pipes that should be replaced can be identified, thereby negating the need to replace part of the pipes on a routine basis as part of maintaining the system, etc.

As will be appreciated by those skilled in the art, the fact that the flow meter of the present invention does not have any moving parts immersed in the water (e.g. an impeller used in certain prior art flow meters), reduces substantially the scaling effect, which in turn leads to a substantially longer life period expectancy for this flow meter over those used in the industry.

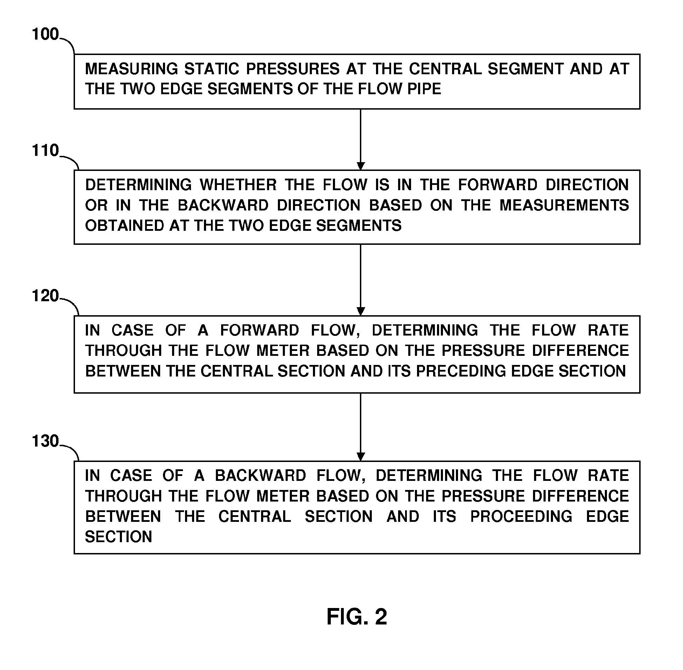

FIG. 2 demonstrates a flow chart of a method of carrying out an embodiment of the present invention. According to the method exemplified, the static pressures are measured at the central segment and at the two edge segments of the flow pipe (step 100). Then, the flow is determined to be either a forward flow or a backward flow based on the measurements obtained at the two edge segments, i.e. the segment at which the measured pressure higher is the "leading" section, or in other words is the first segment of the flow pipe through which the water flows (step 110).

In case of a forward flow, the flow rate through the flow meter is determined based on the pressure difference between the central section and its preceding edge section (as shown in FIG. 1), wherein the preceding section is determined with respect to the forward direction flow (step 120). In case of a backward flow, the flow rate through the flow meter is determined based on the pressure difference between the central section and its proceeding edge section (as shown in FIG. 1), wherein the proceeding section is defined with respect to the forward direction flow (step 130).

However, it should be understood that although the apparatus provided by the present invention comprises means to obtain static pressure measurements at the three segments of the flow pipe, the way that the results of these measurement are processed, may be by any one of a number of variations. For example, carrying out a calculation of the amount of flow, in which the measured results at only two of the three segments are applied.

The present invention has been described using detailed descriptions of embodiments thereof that are provided by way of example and are not intended to limit the scope of the invention in any way.

The described embodiments comprise different features, not all of which are required in all embodiments of the invention. Some embodiments of the present invention utilize only some of the features or possible combinations of the features. Variations of embodiments of the present invention that are described and embodiments of the present invention comprising different combinations of features noted in the described embodiments will occur to persons of the art. Also, the order at which the steps of the method embodiments are carried out should not be understood to limit the present invention, as they may be carried out according to any one of a number of variations. The scope of the invention is limited only by the following claims.

**Claims**

1. A flow meter comprising a flow pipe operative for measuring consumption of fluid passing through said flow pipe irrespective of flow direction, wherein the flow pipe comprises three segments, a central segment and two edge segments, each located at a different side of the central segment in a way that the three segments form a continuous passage for the passing fluid, wherein the flow meter is configured to enable flow of the fluid via an aperture to/from the central segment from/to a respective edge segment, and wherein each of the edge segments has an inner diameter greater than that of the respective aperture enabling the flow from/to that edge segment to/from the central segment, the flow meter further comprising three pressure meters, each configured to enable measuring static pressure of the fluid flowing through a respective one of the three segments, thereby enabling to determine forward and backward fluid flows through the flow pipe.

2. The flow meter of claim 1, further comprising temperature measuring means operative to retrieve actual temperature of the fluid flowing through the flow pipe, to enable adjustment of the forward and backward fluid flows through the flow pipe in accordance with the measured temperature.

3. The flow meter of claim 1, further comprises a transmitter operative to transmit towards a remote location, data that relates to the forward and backward fluid flows through the flow pipe.

4. A method for monitoring fluid consumption by a flow meter comprising flow pipe that includes three segments, a central segment and two edge segments, each located at a different side of the central segment in a way that the three segments form a continuous passage for the passing fluid, wherein the flow meter is configured to enable flow of the fluid via an aperture to/from the central segment from/to a respective edge segment, and wherein each of the edge segments has an inner diameter greater than that of the respective aperture that enables flow from/to said edge segment to/from the central segment, the flow meter further comprising three pressure meters, each connected to a respective one of the three segments of the flow pipe, and configured to measure static pressure thereat, the method comprising the steps of:

    measuring pressure at the central segment of the flow pipe and pressure at at least one of the edge segments of the flow pipe; and
    determining amount of fluid flowing from the at least one of the edge segments of the flow pipe to the central part thereof.

5. The method of claim 4, further comprising a step of measuring temperature of the fluid passing through the flow pipe concurrently with measuring the static pressures, and adjusting a calculated amount of the fluid flow in accordance with the measured temperature.

6. The method of claim 4, comprising the steps of:

    (i) measuring static pressure at the edge segment that precedes the central segment of the flow pipe in the forward direction and the static pressure at the central segment;
    (ii) determining the amount of fluid flow in the forward direction based on the results of the measurements of the static pressure at central segment and at the edge segment that precedes the central segment;
    (iii) measuring the static pressure at the edge segment that follows the central segment of the flow pipe in the forward direction;
    (iv) determining amount of fluid flow in the backward direction based on the results of the measurements of the static pressure at central segment and at the edge segment that follows the central segment; and
    (v) subtracting the amount of fluid flowing in the backward direction from the amount of fluid flowing in the forward direction, thereby determining net forward fluid flow that passed through the flow pipe.

7. The method of claim 4, further comprising a step of determining whether the flow is a flow in a forward direction or in a backward direction, based on the results of the pressure measurements at both edge segments.

8. The method of claim 4, further comprising a step of transmitting data that relates to the forward and backward fluid flows through the flow pipe, towards a remote location.

9. The method of claim 4, further comprising a step of identifying locations of leaks based on the results of the forward and backward measurements.

10. The method of claim 4, further comprising a step of carrying out within a pre-defined period of time at least one measurement of a pressure difference resulting from a forward direction flow and at least one measurement of a pressure difference resulting from a backward direction flow.

**FIG. 1**

100 — MEASURING STATIC PRESSURES AT THE CENTRAL SEGMENT AND AT THE TWO EDGE SEGMENTS OF THE FLOW PIPE

110 — DETERMINING WHETHER THE FLOW IS IN THE FORWARD DIRECTION OR IN THE BACKWARD DIRECTION BASED ON THE MEASUREMENTS OBTAINED AT THE TWO EDGE SEGMENTS

120 — IN CASE OF A FORWARD FLOW, DETERMINING THE FLOW RATE THROUGH THE FLOW METER BASED ON THE PRESSURE DIFFERENCE BETWEEN THE CENTRAL SECTION AND ITS PRECEDING EDGE SECTION

130 — IN CASE OF A BACKWARD FLOW, DETERMINING THE FLOW RATE THROUGH THE FLOW METER BASED ON THE PRESSURE DIFFERENCE BETWEEN THE CENTRAL SECTION AND ITS PROCEEDING EDGE SECTION

FIG. 2

Europäisches
Patentamt

European
Patent Office

Office européen
des brevets

## EUROPEAN SEARCH REPORT

Application Number

EP 14 15 4081

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 886 267 A (ORTIZ MARCOS GERMAN [US]) 23 March 1999 (1999-03-23) * abstract; figure 1 * * column 2, lines 29-44 * * column 4, line 64 - column 5, line 34 * * column 5, lines 36-39 * ----- | 1,3-8 | INV. G01F1/36 G01F1/50 G01F1/72 |
| X | WO 02/093114 A1 (LEWIS GARY WAYNE [US]) 21 November 2002 (2002-11-21) * page 7, lines 16-21 * * page 8, lines 10-14 * * page 10, lines 1-8 * * page 10, lines 11-25 * * figures 2, 4, 6, 7 * ----- | 1,2,4-6 | |
| A | EP 1 118 841 A2 (NGK SPARK PLUG CO [JP]) 25 July 2001 (2001-07-25) * paragraph [0012] * ----- | 6 | |

TECHNICAL FIELDS
SEARCHED       (IPC)

G01F

The present search report has been drawn up for all claims

| Place of search | Date of completion of the search | Examiner |
|---|---|---|
| The Hague | 18 March 2014 | Tomasoni, Flora |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

  .....................................................................................................

& : member of the same patent family, corresponding
     document

EPO FORM 1503 03.82 (P04C01)

**ANNEX TO THE EUROPEAN SEARCH REPORT
ON EUROPEAN PATENT APPLICATION NO.**                    EP 14 15 4081

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2014

| Patent document cited in search report | | Publication date | Patent family member(s) | | Publication date |
|---|---|---|---|---|---|
| US 5886267 | A | 23-03-1999 | AU | 711838 B2 | 21-10-1999 |
| | | | AU | 5021396 A | 21-08-1996 |
| | | | BR | 9605299 A | 16-09-1997 |
| | | | CA | 2187029 A1 | 08-08-1996 |
| | | | EP | 0754293 A1 | 22-01-1997 |
| | | | NO | 964171 A | 03-12-1996 |
| | | | NZ | 303801 A | 28-07-1998 |
| | | | PL | 316637 A1 | 03-02-1997 |
| | | | US | 5641915 A | 24-06-1997 |
| | | | US | 5717146 A | 10-02-1998 |
| | | | US | 5827977 A | 27-10-1998 |
| | | | US | 5834659 A | 10-11-1998 |
| | | | US | 5886267 A | 23-03-1999 |
| | | | WO | 9624028 A1 | 08-08-1996 |
| WO 02093114 | A1 | 21-11-2002 | AT | 395579 T | 15-05-2008 |
| | | | EP | 1387999 A1 | 11-02-2004 |
| | | | US | 2002189369 A1 | 19-12-2002 |
| | | | WO | 02093114 A1 | 21-11-2002 |
| EP 1118841 | A2 | 25-07-2001 | EP | 1118841 A2 | 25-07-2001 |
| | | | JP | 2001272256 A | 05-10-2001 |
| | | | US | 2001020394 A1 | 13-09-2001 |

EPO FORM P0459

For more details about this annex : see Official Journal of the European Patent Office, No. 12/82